(19) **Europäisches Patentamt**

**European Patent Office**

**Office européen des brevets**

(11) **EP 1 244 577 B1**

(12) **EUROPÄISCHE PATENTSCHRIFT**

(45) Veröffentlichungstag und Bekanntmachung des Hinweises auf die Patenterteilung:
**29.10.2003 Patentblatt 2003/44**

(21) Anmeldenummer: **00977576.8**

(22) Anmeldetag: **27.11.2000**

(51) Int Cl.⁷: **B60R 21/01**

(86) Internationale Anmeldenummer:
**PCT/EP00/11778**

(87) Internationale Veröffentlichungsnummer:
**WO 01/047750 (05.07.2001 Gazette 2001/27)**

(54) **VERFAHREN UND VORRICHTUNG ZUM BESTIMMEN DES ORTES EINER KRAFTEINWIRKUNG AUF EIN FAHRZEUG SOWIE ZUM STEUERN DES AUSLÖSENS MINDESTENS EINES AIRBAGS**

METHOD AND DEVICE FOR DETECTING THE POINT OF FORCE EXERTION ON A VEHICLE AND FOR CONTROLLING THE RELEASE OF AT LEAST ONE AIRBAG

PROCEDE ET DISPOSITIF PERMETTANT DE DETERMINER LE POINT D'ACTION D'UNE FORCE SUR UN VEHICULE ET DE COMMANDER LE DECLENCHEMENT D'AU MOINS UN AIRBAG

(84) Benannte Vertragsstaaten:
**DE FR GB**

(30) Priorität: **24.12.1999 DE 19963348**

(43) Veröffentlichungstag der Anmeldung:
**02.10.2002 Patentblatt 2002/40**

(73) Patentinhaber: **Volkswagen Aktiengesellschaft 38436 Wolfsburg (DE)**

(72) Erfinder: **HOPPE, Gerd 38108 Braunschweig (DE)**

(56) Entgegenhaltungen:
**EP-B- 0 305 654      WO-A-99/17965
DE-A- 19 842 939      DE-A- 19 900 327
DE-C- 19 651 123**

**EP 1 244 577 B1**

**Beschreibung**

Die Erfindung betrifft ein Verfahren und eine Vorrichtung zum Bestimmen des Ortes einer Krafteinwirkung auf ein Fahrzeug, die insbesondere in Zusammenhang mit einem Airbag-Steuersystem Anwendung Rinden, sowie ein Verfahren zum Steuern des Auslösens mindestens eines Airbags.

Aus der DE 37 43 961 A ist ein Airbag-System eines Fahrzeuges bekannt, das zwei zueinander parallel geschaltete mechanische Crash-Sensoren aufweist. Die Crash-Sensoren sind räumlich verschieden zueinander orientiert, z. B. ist der eine CrashSensor in Fahrtrichtung und der andere senkrecht dazu ausgerichtet. Da beide mechanischen Crash-Sensoren nur richtungsorientiert ansprechen können, ergänzen sie sich gegenseitig. Die Ausgangssignale beider Crash-Sensoren werden mit vorgegebenen Referenzsignalen verglichen, um ein fehlerhaftes Auslösen des Airbags zu verhindern.

Aus der WO 98/36949 ist ebenfalls ein Airbag-Steuersystem bekannt, bei dem ein Beschleunigungssensor fest mit dem Fahrzeug verbunden ist und die Größe und Richtung der Beschleunigung entlang einer oder mehrerer Achsen der Fahrzeugbewegung mißt. In Abhängigkeit von dem Ausgangssignal des Beschleunigungssensors wird In der Steuereinheit die Stärke und Richtung des Aufpralls auf das Fahrzeug berechnet. Durch Vergleich mit vorgegebenen Werten wird bestimmt, ob der Aufprall genügend groß gewesen ist, um den mindestens einen Airbag auszulösen.

Beide zuvor beschriebenen Verfahren weisen den Nachteil auf, daß beim Überfahren von Gegenständen auf der Straße diese zu Schlägen am Fahrzeugunterboden führen und eine falsche Airbagauslösung bewirken können. Denn die Schläge am Fahrzeugunterboden können eine Stärke erreichen, daß die vorhandenen Airbagsensoren den mindestens einen Airbag auslösen. Das Überfahren von Gegenständen kann daher nicht von einem tatsächlichen Unfall unterschieden werden.

Die WO99/17965 A, die als nächstliegender Stand der Technik für den Gegenstand des Anspruchs 1 angesehen wird, beschreibt ein Verfahren, bei dem unter Verwendung von mindestens zwei Körperschallsensoren im Fahrzeug die Richtung eines Aufpralls erkannt werden kann. Aus einem zeitlichen Vergleich der beiden Körperschallsignale können insbesondere die Geschwindigkeit der eindringenden Struktur und ihre Eindringrichtung erkannt werden. In Abhängigkeit von der Richtung werden ein oder mehrere Insassenschutzmittel ausgewählt. Das Auslösen des ausgewählten Insassenschutzmittels erfolgt in Abhängigkeit von der Geschwindigkeit der eindringenden Struktur.

Die DE 198 42 939 A zeigt die Merkmale des Oberbegriffs von Anspruch 1. Eine zeitaufgelöste Messung der Krafteinwirkung geht nicht hervor.

Daher liegt der vorliegenden Erfindung das technische Problem zugrunde, ein Verfahren und eine Vorrichtung anzugeben, bei dem der Ort einer Erschütterung erkannt wird.

Erfindungsgemäß ist das zuvor genannte technische Problem durch ein Verfahren zum Bestimmen des Ortes einer Krafteinwirkung auf ein Fahrzeug gemäß Anspruch 1 gelöst, bei dem mit Hilfe von mindestens drei im Fahrzeug voneinander beabstandet angeordneten Sensoren jeweils ein Zeitpunkt zu dem ein Signal einer Krafteinwirkung eintrifft gemessen wird, bei dem die Laufzeitdifferenzen zwischen den Meßsignalen von mindestens zwei unabhängigen Paaren von Sensoren berechnet werden und bei dem der Ort der Krafteinwirkung aus den mindestens zwei Laufzeitdifferenzen, aus der Signalgeschwindigkeit und aus den Koordinaten der Sensorpositionen berechnet wird.

Durch Messen der Signallaufzeit im Fahrzeug selbst kann also zuverlässig der Ort der Krafteinwirkung auf das Fahrzeug bestimmt werden.

In den Unteransprüchen 2 bis 10 sind weitere vorteilhafte Ausgestaltungen des Verfahren angegeben, die weiter unten anhand eines Ausführungsbeispiels näher beschrieben werden.

Das oben aufgezeigte technische Problem wird auch durch ein Verfahren zum Steuern des Auslösens mindestens eines Airbags eines Fahrzeuges gelöst, bei dem mit Hilfe des zuvor beschriebenen Verfahrens der Ort einer Krafteinwirkung auf das Fahrzeug bestimmt wird, bei dem eine erste Zone von Orten der Krafteinwirkung vorgegeben wird, in der eine Krafteinwirkung als Unfall angesehen wird, bei dem eine zweite Zone von Orten der Krafteinwirkung vorgegeben wird, in der eine Krafteinwirkung nicht als Unfall angesehen wird, bei dem bestimmt wird, ob der Ort der Krafteinwirkung in der ersten-Zone oder der zweiten Zone liegt, und bei dem der mindestens eine Airbag dann ausgelöst wird, wenn der Ort der Krafteinwirkung in der ersten Zone liegt.

Da erfindungsgemäß der Ort der Krafteinwirkung bestimmt werden kann, kann diese Information auch dazu verwendet werden, ein unbeabsichtigtes Auslösen des mindestens einen Airbags dann zu verhindern, wenn der Fahrzeugunterboden als Quelle der Erschütterung erkannt wird. Zudem kann bei einem Unfall der Ort der Krafteinwirkung genau bestimmt werden, wodurch eine Optimierung der Auslöseschellen und des Zündzeitpunktes erfolgen kann.

In bevorzugter Weise weisen die erste Zone und die zweite Zone jeweils mindestens einen Bereich auf. Daher kann jede der Zonen auch mehrere separate Bereiche umfassen, wodurch eine komplexe Auswertung der Ortsbestimmung der Krafteinwirkung auf das Fahrzeug für ein Auslösen des mindestens einen Airbags in zuverlässiger Weise realisiert werden kann.

Das oben aufgezeigte technische Problem wird auch durch eine Vorrichtung zum Bestimmen des Ortes einer Krafteinwirkung auf ein Fahrzeug gemäß Anspruch 13 mit einer Steuereinheit und mit mindestens drei Sensoren gelöst, wobei die Sensoren mit der Steuereinheit verbunden sind und die Sensoren geeignet sind, die Krafteinwirkung zeltaufgelöst zu messen ,und die Steuereinheit geeignet ist, den Ort der Krafteinwirkung aus den Laufzeitdifferenzen der zeitaufgelösten Meßsignale, der Signalgeschwindigkeiten und der Sensorpositionen zu berechnen.

In den abhängigen Ansprüchen 14 bis 17 sind vorteilhafte Ausgestaltungen dieser Vorrichtung beschrieben, die unten anhand eines Ausführungsbeispieles näher erläutert werden.

Schließlich wird das oben genannte technische Problem auch durch eine Vorrichtung zum Steuern des Auslösens mindestens eines Airbags eines Fahrzeuges mit einer Vorrichtung zum Bestimmen des Ortes der Krafteinwirkung der zuvor beschriebenen Art gelöst.

Im folgenden wird die Erfindung anhand von Ausführungsbeispielen näher erläutert, wobei auf die Zeichnung bezug genommen wird. In der Zeichnung zeigen

Fig. 1    in einer schematischen Darstellung ein Fahrzeug mit einem Fahrzeugunterboden sowie Sensoren und Steuereinheit,

Fig. 2    in einem karthesischen Diagramm die Positionen der Sensoren sowie Linien gleicher Laufzeitdifferenzen zwischen den Sensoren S1 und S2,

Fig. 3    in einem karthesischen Diagramm die Positionen der Sensoren sowie Linien gleicher Laufzeitdifferenzen zwischen den Sensoren S1 und S3,

Fig. 4    eine Kombination aus den Darstellungen der Fig. 2 und 3 mit dem Ort der Krafteinwirkung sowie mit einer Aufteilung des Fahrzeugunterbodens In zwei Zonen,

Fig. 5    eine den Fig. 2 und 3 entsprechende Darstellung mit einem Raster aus Linien gleicher Laufzeitdifferenzen zwischen den Sensorpaaren S1-S2 und S1-S3 sowie mit einer Aufteilung des Fahrzeugunterbodens in zwei Zonen und

Fig. 6    eine den Fig. 2 und 3 entsprechende Darstellung mit zwei Hyperbeln mit zwei Schnittpunkten, die das Problem der Doppellösungen darstellen.

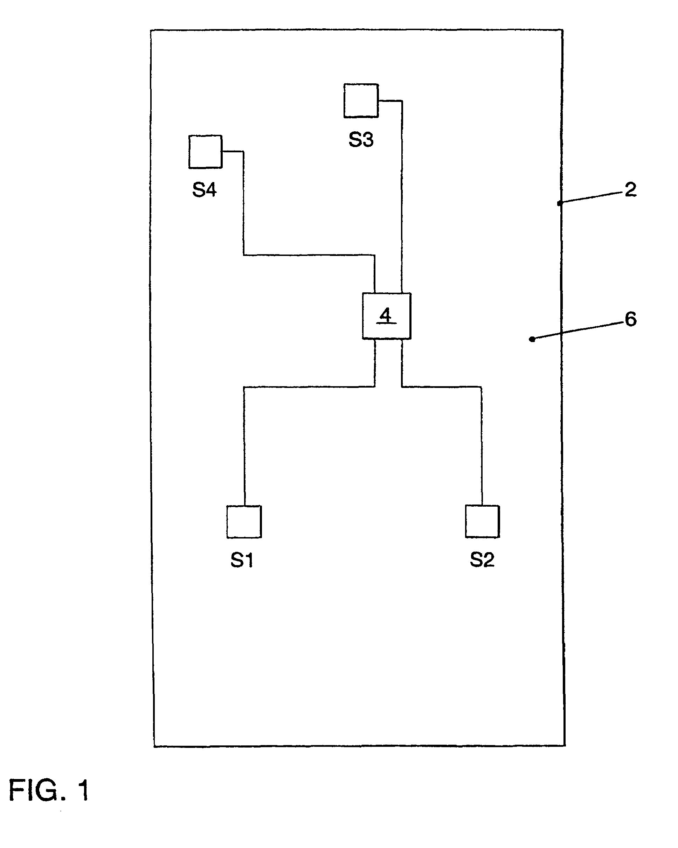

Fig. 1 zeigt eine Vorrichtung zum Bestimmen des Ortes einer Krafteinwirkung auf ein Fahrzeug 2 mit einer Steuereinheit 4 und mit vier Sensoren S1, S2, S3 und S4. Die Sensoren S1 bis S4 sind über Leitungen mit der Steuereinheit 4 verbunden. Ebenso sind auch drahtlose Verbindungen möglich. Die Sensoren S1 bis S4 messen zeltaufgelöst die Krafteinwirkung auf das Fahrzeug 2 und übertragen die entsprechenden Meßsignale auf die Steuereinheit 4. Die Steuereinheit 4 wertet die Meßsignale aus und ermittelt aus Laufzeitdifferenzen zwischen Meßwerten von Paaren von Sensoren S1 bis S4 den Ort einer Krafteinwirkung auf das Fahrzeug 2.

Wie Fig. 1 darstellt, sind die Positionen der Sensoren S1 bis S4 im wesentlichen in einer Ebene, nämlich im Bereich des Fahrzeugunterbodens 6 angeordnet. Durch die ebene Anordnung ist die der Auswertung zugrunde zu legenden Mathematik dahingehend vereinfacht, daß die Laufzeiten in nur zwei karthesischen Koordinaten, nämlich x und y dargestellt werden können. Die zusätzliche vertikale z-Komponente kann weggelassen bzw, vernachlässigt werden.

Bei bestehenden Systemen ist es jedoch von Vorteil, bereits standardmäßig verwendete Sensoren einzusetzen, die dann in der Steuereinheit 4 selbst und/oder im Mitteltunnel und/oder im Sitzquerträger unter den vorderen Sitzen und/oder in den Radkästen und/oder in den Stoßfängern angeordnet sind. Da diese Einbauorte der Sensoren jeweils zumindest benachbart zum Fahrzeugunterboden angeordnet sind, kann auch bei diesen Einsatzorten in guter Näherung davon ausgegangen werden, daß die Sensoren in einer Ebene angeordnet sind. Somit kann die beschriebene Vorrichtung zum Bestimmen des Ortes einer Krafteinwirkung an einem Fahrzeug auch ohne eine Nachrüstung eines Fahrzeuges realisiert werden.

Als Sensoren kommen jegliche Art von Sensoren In Frage, die in der Lage sind, eine Krafteinwirkung in Form einer Erschütterung nachzuweisen. Dieses sind bekanntermaßen Mikrophone, Klopfsensoren oder Beschleunigungssensoren. Dabei können alle Sensoren S1 bis S4 in einer Art von Sensoren oder als unterschiedliche Sensoren ausgebildet sein. In jedem Fall ist die Mindestanforderung an eine zeitaufgelöste Messung der Krafteinwirkung gegeben.

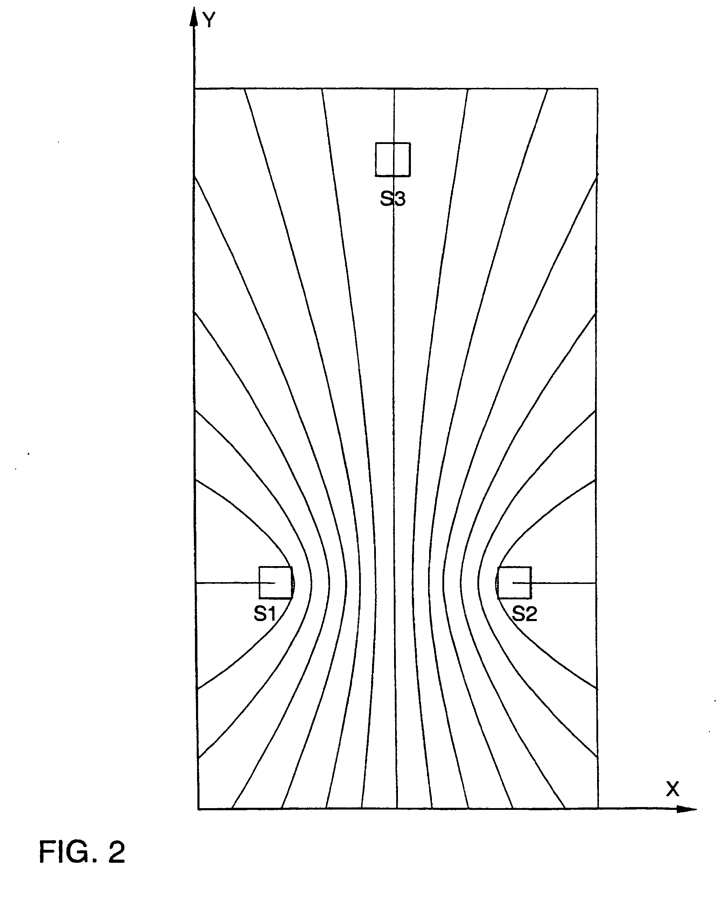

In den Fig. 2 bis 6 sind karthesische Darstellungen gezeigt, anhand derer das erfindungsgemäße Verfahren zum Bestimmen des Ortes einer Kraftsinwirkung auf ein Fahrzeug sowie das Verfahren zum Steuern des Auslösens mindestens eines Airbags eines Fahrzeuges erläutert werden.

Fig. 2 zeigt den karthesischen Bereich des Fahrzeugunterbodens als Rechteck in einem xy-Diagramm. Die Sensoren S1, S2 und S3 sind mit ihrem Einbauort durch entsprechende Quadrate dargestellt. Mit Hilfe der drei beabstandet zueinander angeordneten Sensoren S1, S2 und S3 wird der Zeitpunkt der Krafteinwirkung am Ort der Sensoren gemessen. Aus den gemessenen Zeitpunkten werden für zwei unabhängige Paare von Sensoren S1 und S2 sowie S1 und S3 die Laufzeitdifferenzen berechnet. Zur Veranschaulichung sind in Fig. 2 die Linien gleicher Laufzeitdifferenzen für das Sensorenpaar S1 und S2 und für die bekannte Signalgeschwindigkeit v dargestellt, Denn die Laufzeitdifferenzen können über die Signalgeschwindigkeit in das karthesische Ortsdiagramm übertragen werden. Für jeden Wert einer Laufzeitdifferenz liegt der Ort der Krafteinwirkung auf einer Linie gleicher Laufzeitdifferenzen, so daß sich der Ort der Krafteinwirkung nicht aus einer Laufzeitdifferenz berechnen läßt.

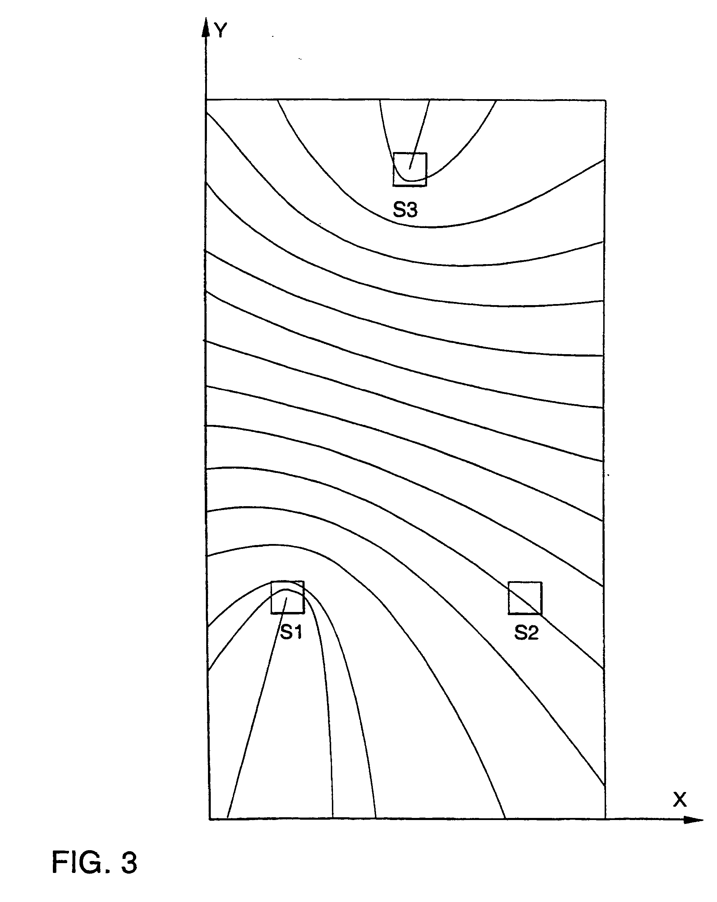

Fig. 3 zeigt eine ähnliche Darstellung wie in Fig. 2, wobei für das Paar von Sensoren S1 und S3 die Linien gleicher Laufzeitdifferenzen dargestellt sind. Auch hier ergibt sich eine Schar von hyperbelförmigen Linien.

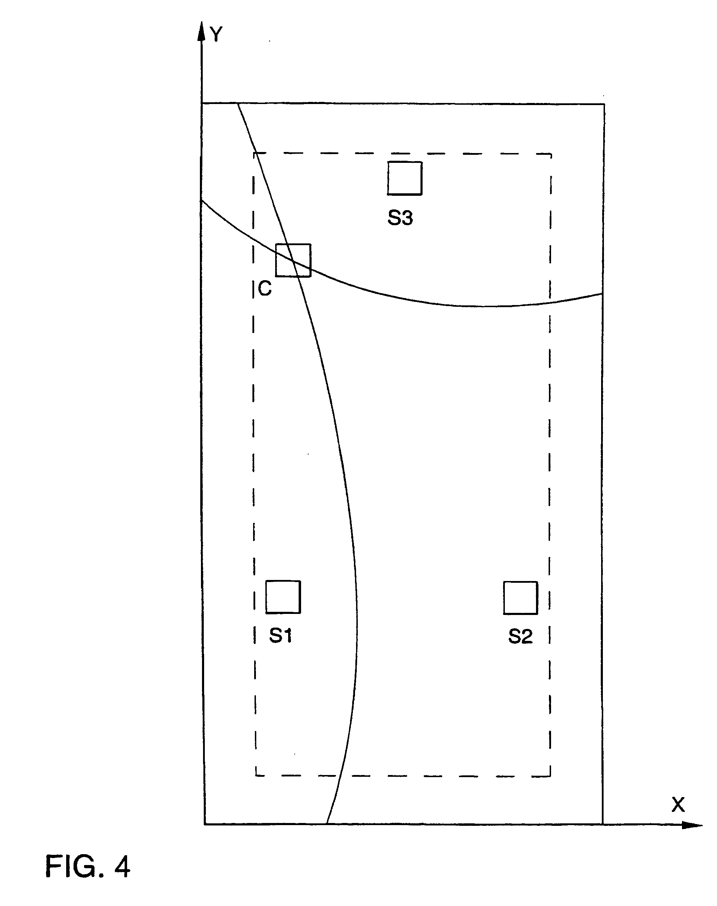

In Fig. 4 ist der Ort der Krafteinwirkung mit C und einem entsprechenden Quadrat gekennzeichnet. Fig. 4 zeigt den Verlauf zweier Hyperbeln, von denen jeweils eine zu den Sensorpaaren S1 und 2 sowie S1 und S3 gehören. Somit ergibt sich aus der graphischen Darstellung der Laufzeitdifferenzen der Meßwerte von jeweils zwei Sensorpaaren, hier S1 und S2 sowie S1 und S3, daß der Ort der Krafteinwirkung auf das Fahrzeug im Schnittpunkt der zugehörigen Linien gleicher Laufzeitdifferenzen liegt.

Die Bestimmung der Koordinaten x und y des Ortes der Krafteinwirkung auf das Fahrzeug läßt sich mathematisch folgendermaßen lösen.

Die Signalwege ergeben sich als Produkt aus Signalgeschwindigkeit v und Laufzeit ($t_i$-t) sowie im karthesischen Diagramm nach dem Satz des Pythagoras zu folgenden Gleichungen:12

$$v \cdot (t_1 - t) = \sqrt{(x - x_1)^2 + (y - y_1)^2}$$

$$v \cdot (t_2 - t) = \sqrt{(x - x_2)^2 + (y - y_2)^2}$$

$$v \cdot (t_3 - t) = \sqrt{(x - x_3)^2 + (y - y_3)^2}$$

mit

x, y -        Koordinaten der Krafteinwirkung,

t -        Zeitpunkt der Krafteinwirkung,

$x_i$, $y_i$ -        Koordinaten der Sensoren i, mit i = 1,2,3,

$t_t$ -        gemessener Zeltpunkt der Krafteinwirkung am Ort der Sensoren i,

v -        Signalgeschwindigkeit,

Durch Auflösen der Gleichungen nach ($t_i$-t) und Differenzblldung ergibt sich:

$$v \cdot (t_i - t_j) = \sqrt{(x - x_i)^2 + (y - y_i)^2} - \sqrt{(x - x_j)^2 + (y - y_j)^2}$$

$$v \cdot (t_i - t_k) = \sqrt{(x - x_i)^2 + (y - y_i)^2} - \sqrt{(x - x_k)^2 + (y - y_k)^2}$$

mit i, j, k = 1, 2, 3 und i≠j≠k,

Diese Gleichungen weisen die beiden Variablen x und y auf, also die Koordinaten der Krafteinwirkung. Durch Lösen des Gleichungssystems können die Werte x und y bestimmt werden.

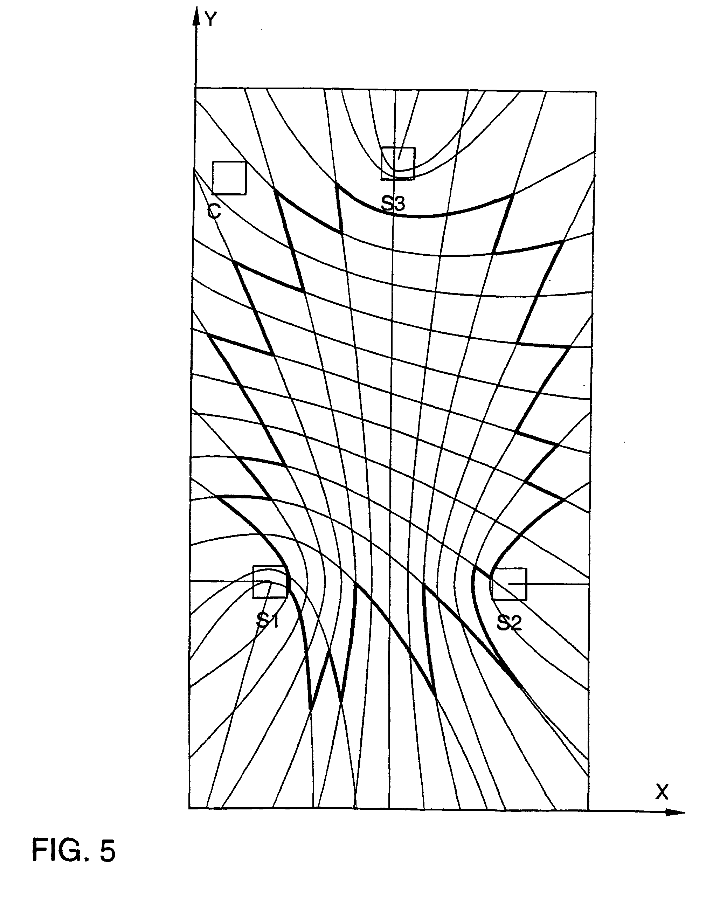

Fig. 5 zeigt ein weiteres Ausführungsbeispiel eines Verfahrens zur Auswertung der Meßwerte der Sensoren. Dazu zeigt Fig. 5 eine Kombination der in den Fig. 2 und 3 dargestellten Scharen von Linien gleicher Laufzeitdifferenzen für die Paare von Sensoren S1 und S2 sowie S1 und S3. Daraus ergibt sich ein Raster von einer Mehrzahl von Teilflächen, wobei jeder Teilfläche die minimalen und maximalen Laufzeitdifferenzen für beide Paare von Sensoren S1 und S2 sowie S1 und S3 zugeordnet werden, Mit anderen Worten ist für jede Teilfläche ein vorgegebener Bereich von Laufzeitdifferenzen gegeben. Dabei können die minimalen und maximalen Laufzeitdifferenzen für die Teilflächen entweder berechnet oder experimentell bestimmt werden.

Fig. 5 zeigt ein Raster aus Hyperbellinien als Linien gleicher Laufzeitdifferenzen für jeweils Paare von Sensoren S1 und S2 sowie S1 und S3. Jedoch kann der dargestellte karthesische Bereich des Fahrzeugunterbodens auch in ein Raster von geraden oder in anderer Form gekrümmten Linien eingeteilt werden. Aufgrund der Einfachheit der mathematischen Auswertung, die im folgenden beschrieben wird, wird aber die Ausbildung des Rasters mit Hyperbellinien bevorzugt.

Bei der Auswertung der gemessenen Zeitpunkte der Krafteinwirkung gemessen an den Sensororten S1, S2 und S3, werden die Laufzeitdifferenzen für die beiden Paare von Sensoren S1 und S2 sowie S1 und S3 bestimmt. Daraus ergibt sich ein Paar von Laufzeitdifferenzen, dem bei bekannter Signalgeschwindigkeit v eine Teilfläche zugeordnet werden kann. Somit kann in einfacher Weise die Teilfläche bestimmt werden, in der der Ort der Krafteinwirkung liegt. Da es in der Regel nicht auf eine hochgenaue Ortsbestimmung ankommt, reicht es aus, eine begrenzte Teilfläche angeben zu können, die den Ort der Krafteinwirkung auf das Fahrzeug hinreichend genau bestimmt. Bei dem in Fig. 5 dargestellten Ausführungsbeispiel liegt der mit C und einem Quadrat gekennzeichnete Ort der Krafteinwirkung in der oberen linke Ecke des karthesischen Bereiches des Fahrzeugunterbodens.

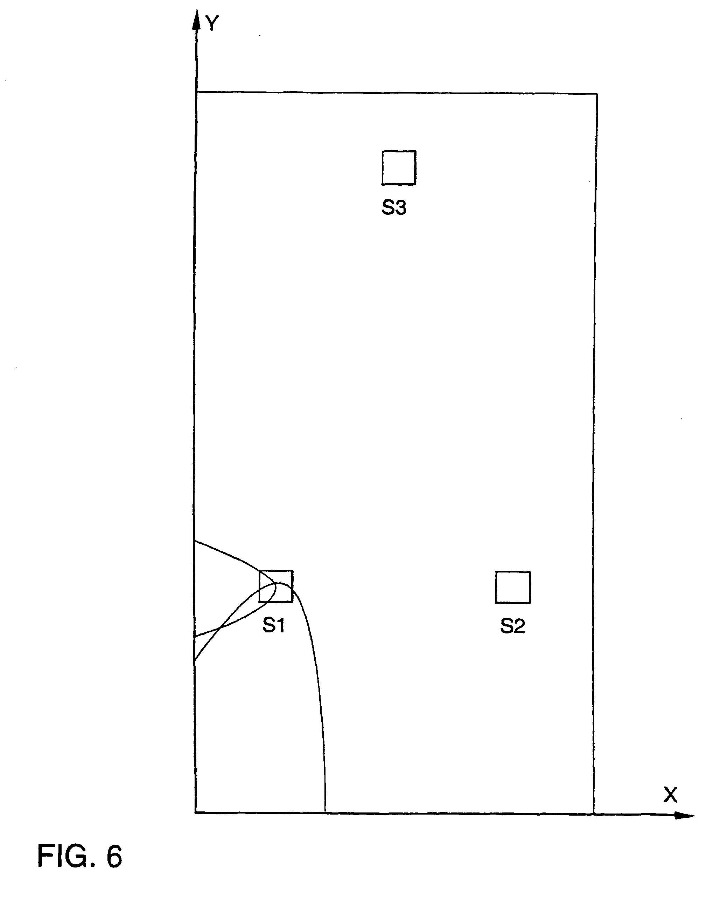

In den Fig. 2 bis 5 sind die Linien gleicher Laufzeitdifferenzen für die Sensoren S1 und S2 sowie S1 und S3 als Hyperbeln dargestellt. Wie insbesondere Fig. 4 zeigt, kann der Ort der Krafteinwirkung C durch den Schnittpunkt zweier Hyperbeln gleicher Laufzeitdifferenzen bestimmt werden. Fig. 6 zeigt dagegen, daß die Lösung des mathematischen Problems nicht in jedem Fall eindeutig ist. So sind in Fig. 6 zwei Hyperbeln im Bereich des Sensorortes S1 dargestellt, die zwei Schnittpunkte aufweisen und somit bei der mathematischen Lösung des Problems eine Ungenauigkeit auftritt. Diese Ungenauigkeit kann dadurch vermieden werden, daß die Sensororte S1, S2 und S3 in der Nähe des Randes des karthesischen Bereiches des Fahrzeugunterbodens angeordnet sind. Denn die Hyperbeln mit doppelten Schnittpunkten innerhalb des karthesischen Bereiches des Fahrzeugunterbodens liegen im Bereich der jeweiligen Sensororte S1, S2 und S3 und die zweiten Schnittpunkte liegen jeweils auf den den anderen Sensororten abgewandten Seiten des betreffenden Sensorortes. Beispielsweise liegen in Fig. 1 die Hyperbeln im Bereich der unteren rechten Ecke, also bei kleinen x- und y-Werten. Dieser Bereich des Fahrzeugunterbodens ist von den anderen beiden Sensoren S2 und S3 abgewandt. Werden daher die Sensororte Im Bereich des Randes des Fahr-zeugunterbodens angeordnet, können die durch doppelte Lösungen auftretenden Ungenauigkeiten des mathematischen Auswertungsverfahrens vermieden werden.

Das Problem der Doppellösungen kann auch durch die Anordnung eines vierten Sensors S4 gelöst werden, wie es bspw. in Fig. 1 dargestellt ist. Für den Sensor S4 kann eine weitere Gleichung für den Signalweg aufgestellt werden, so daß das Gleichungssystem überbestimmt ist und für den karthesischen Bereich der zuvor beschriebenen Doppellösungen bei der Anwendung von lediglich drei Sensoren zu einer mathematisch eindeutigen Lösung führt.

Die zuvor beschriebenen Verfahren zum Bestimmen des Ortes einer Krsfteinwirkung auf ein Fahrzeug werden bei einem Verfahren zum Steuern des Auslösens mindestens eines Airbags eines Fahrzeuges angewendet Somit wird der Ort der Krafteinwirkung zumindest mit der Genauigkeit einer Teilfläche bestimmt. Weiterhin wird bei dem Verfahren der Bereich des Fahrzeugunterbodens in zwei Zonen von Orten der Krafteinwirkung eingeteilt. Liegt der Ort der Krafteinwirkung in der ersten Zone, so wird die Krafteinwirkung als Unfall angesehen. Liegt dagegen der Ort der Krafteinwirkung In der zweiten Zone, so wird die Krafteinwirkung nicht als Unfall angesehen. Anschließend wird bestimmt, ob der zuvor aus den Meßwerten der Sensoren S1, S2 und S3 sowie gegebenenfalls S4 berechnete Ort der Krafteinwirkung in der ersten Zone oder in der zweiten Zone liegt. Der Airbag wird dann ausgelöst, wenn der Ort der Krafteinwirkung In der ersten Zone liegt, also als Unfall angesehen wird. Dadurch kann in zuverlässiger Weise vermieden werden, daß bspw. beim Überfahren von Gegenständen und beim Heraufschleudern dieser Gegenstände an den Fahrzeugunterboden das Ereignis nicht zum Auslösen eines Airbags führt. Bei dem zuvor beschriebenen Ablauf des Verfahrens wird weiterhin berücksichtigt, ob die Stärke des Aufpralls einen vorgegebenen Schwellenwert überschreitet, wie es üblicherweise bei einem Auslöseverfahren für Airbags berücksichtigt wird.

In den Fig. 4 und 5 sind zwei Bespiele von ersten und zweiten Zonen dargestellt. In Fig. 1 ist im karthesischen Bereich des Fahrzeugunterbodens mit einer gestrichelten Linie die Unterteilung in eine äußere, erste Zone und eine zweite innere Zone vorgenommen. Die erste Zone entspricht also einem Streifen, der umfangseitig entlang des Randes des Fahrzeugunterbodens verläuft. Wie Fig. 4 weiterhin zeigt, liegt der Ort der Krafteinwirkung, der mit C gekennzeichnet ist, innerhalb der zweiten inneren Zone, so daß bei Auftreten dieses Ereignisses der mindestens eine Airbag nicht ausgelöst wird, da der Ort der Krafteinwirkung nicht einem typischen Auffahrunfall entspricht.

Fig. 5 zeigt eine weitere Möglichkeit einer Aufteilung des Fahrzeugunterbodens in zwei Zonen. Da bei dem in Fig. 5 dargestellten Ausführungsbeispiel der Fahrzeugunterboden in ein Raster von hyperbelförmigen Linien gleicher Laufzeitdifferenzen eingeteilt ist und da der Ort der Krafteinwirkung mit der Genauigkeit einer Teilfläche bestimmt wird, verläuft die Trennlinie zwischen der ersten äußeren Zone und der zweiten inneren Zone entlang der Begrenzungslinien zwischen den Teilflächen. Diese Linie ist in Fig. 5 mit einer größeren Linienstärke dargestellt. Es ergibt sich ein zickzack-förmiger Verlauf entsprechend der Rasterform. Wie weiterhin in Fig. 5 dargestellt ist, liegt der Ort der Krafteinwirkung, der mit C gekennzeichnet ist, in der ersten äußeren Zone und führt zum Auslösen des mindestens einen Airbags.

Wie die Fig. 4 und 5 zeigen, weisen die beiden Zonen jeweils einen durchgängigen Bereich auf. Es ist jedoch ebenso möglich, die Zonen in Form von getrennt zueinander angeordneten einzelnen Bereichen auszubilden, je nach dem, in welcher Weise ein Auffahrunfall möglich ist. Diese Aufteilung der Zonen ist insbesondere dann anzuwenden, wenn der Ort der Krafteinwirkung auf das Fahrzeug nicht nur - wie zuvor beschrieben wurde - im Bereich des Fahrzeugunterbodens bestimmt wird, sondern die gesamte Karosserie in die Auswertung einbezogen wird. In diesem Fall

EP 1 244 577 B1

ist es vorteilhaft, wenn bspw. auch das Fahrzeugdach in die zweite Zone einbezogen wird, da ein Aufprall auf das Fahrzeugdach nicht einem Auffahrunfall entspricht, der ein Auslösen des mindestens einen Airbags erfordert. in diesem Fall muß jedoch neben den Koordinaten x und y auch die z-Koordinate des Ortes der Krafteinwirkung bestimmt werden, wozu mindestens vier Sensoren im Fahrzeug verteilt angeordnet sein müssen.

**Patentansprüche**

1. Verfahren zum Bestimmen des Ortes einer Krafteinwirkung auf ein Fahrzeug (2),

   a) bei dem mit Hilfe von mindestens drei im Fahrzeug (2) voneinander beabstandet angeordneten Sensoren (S1, S2, S3, S4) jeweils ein Zeitpunkt zu dem ein Signal einer Krafteinwirkung eintrifft gemessen wird,
   b) bei dem die Laufzeitdifferenzen zwischen den Meßsignalen von mindestens zwei unabhängigen Paaren von Sensoren (S1, S2, S3, S4) berechnet werden und
   c) bei dem der Ort der Krafteinwirkung aus den mindestens zwei Laufzeitdifferenzen, aus der Signalgeschwindigkeit und aus den Koordinaten der Sensorpositionen berechnet wird.

2. Verfahren nach Anspruch 1, bei dem die Sensoren (S1, S2, S3, S4) im wesentlichen in einer Ebene angeordnet sind.

3. Verfahren nach Anspruch 1 oder 2, bei dem die Koordinaten der Sensorpositionen im Bereich des Fahrzeugbodens angeordnet werden.

4. Verfahren nach Anspruch 1, bei dem in Näherung angenommen wird, daß die Sensoren (S1, S2, S3, S4) in einer Ebene angeordnet sind.

5. Verfahren nach einem der Ansprüche 1 bis 4, bei dem im Schritt c) das Gleichungssystem

$$v \cdot (t_i - t_j) = \sqrt{(x - x_i)^2 + (y - y_i)^2} - \sqrt{(x - x_j)^2 + (y - y_j)^2}$$

$$v \cdot (t_i - t_k) = \sqrt{(x - x_i)^2 + (y - y_i)^2} - \sqrt{(x - x_k)^2 + (y - y_k)^2}$$

mit

$x, y$ -    Koordinaten der Krafteinwirkung,
$t$ -    Zeitpunkt der Krafteinwirkung,
$x_i, y_i$ -    Koordinaten der Sensorpositionen i, mit i, j, k = 1, 2, 3 und $i \neq j \neq k$,
$t_i$ -    gemessener Zeitpunkt der Krafteinwirkung am Ort der Sensoren (S1, S2, S3, S4),
$v$ -    Signalgeschwindigkeit,

gelöst wird und die Koordinaten x und y berechnet werden.

6. Verfahren nach einem der Ansprüche 1 bis 4, bei dem die Ebene der Koordinaten der Sensorpositionen bzw. der genäherten Koordinaten der Sensorpositionen durch ein Raster in eine Mehrzahl von Teilflächen aufgeteilt wird und bei dem jeder Teilfläche die minimalen und maximalen Laufzeitdifferenzen für mindestens zwei Paare von Sensoren (S1, S2, S3, S4) bestimmt werden.

7. Verfahren nach Anspruch 6, bei dem die minimalen und maximalen Laufzeitdifferenzen berechnet oder experimentell bestimmt werden.

8. Verfahren nach Anspruch 6 oder 7, bei dem die Rasterlinien von Linien gleicher Laufzeitdifferenzen, insbesondere Hyperbeln gebildet werden.

9. Verfahren nach einem der Ansprüche 6 bis 8, bei dem im Schritt c) aus den Laufzeitdifferenzen die zugehörige Teilfläche berechnet wird, in der der Ort der Krafteinwirkung liegt.

6

**10.** Verfahren nach einem der Ansprüche 1 bis 9, bei dem im Schritt c) das Meßsignal eines vierten Sensors ausgewertet wird.

**11.** Verfahren zum Steuern des Auslösens mindestens eines Airbags eines Fahrzeuges (2),

- bei dem mit Hilfe des Verfahrens nach einem der Ansprüche 1 bis 10 der Ort einer Krafteinwirkung auf das Fahrzeug (2) bestimmt wird,
- bei dem eine erste Zone von Orten der Krafteinwirkung vorgegeben wird, in der eine Krafteinwirkung als Unfall angesehen wird.
- bei dem eine zweite Zone von Orten der Krafteinwirkung vorgegeben wird, in der eine Krafteinwirkung nicht als Unfall angesehen wird,
- bei dem bestimmt wird, ob der Ort der Krafteinwirkung in der ersten Zone oder der zweiten Zone liegt, und
- bei dem der mindestens eine Alrbag dann ausgelöst wird, wenn der Ort der Krafteinwirkung in der ersten Zone liegt.

**12.** Verfahren nach Anspruch 11, bei dem die erste Zone und die zweite Zone jeweils mindestens einen Bereich aufweisen.

**13.** Vorrichtung zum Bestimmen des Ortes einer Krafteinwirkung an einem Fahrzeug (2)

- mit einer Steuereinheit (4) und
- mit mindestens drei Sensoren (S1,S2,S3,S4),
- wobei die Sensoren (S1,S2,S3,S4) mit der Steuereinheit (4) verbunden sind,
- so daß die Meßsignale auf die Steuereinheit (4) übertragbar sind,

    **dadurch gekennzeichnet,**

- **daß** die Sensoren (S1,S2,S3,S4) geeignet sind, die Krafteinwirkung zeitaufgelöst zu messen,, und
- **dass** die Steuereinheit (4) geeignet ist, den Ort der Krafteinwirkung aus den Laufzeitdifferenzen der zeltaufgelösten Meßsignale, der Signalgeschwindigkeiten und den Koordinaten der Sensorpositionen zu berechnen.

**14.** Vorrichtung nach Anspruch 13,
**dadurch gekennzeichnet,**
**daß** die Sensoren (S1,S2,S3,S4) im wesentlichen in einer Ebene angeordnet sind.

**15.** Vorrichtung nach Anspruch 13 oder 14,
**dadurch gekennzeichnet,**
**daß** die Sensoren (S1,S2,S3,S4) im Bereich des Fahrzeugunterbodens (6) angeordnet sind.

**16.** Vorrichtung nach einem der Ansprüche 13 bis 15,
**dadurch gekennzeichnet,**
**daß** die Sensoren (S1,S2,S3,S4) innerhalb der Steuereinheit (4) und/oder im Mitteltunnel und/oder im Sitzquerträger unter den vorderen Sitzen und/oder in den Radkästen und/oder in den Stoßfängern angeordnet sind.

**17.** Vorrichtung nach einem der Ansprüche 13 bis 16,
**dadurch gekennzeichnet,**
**daß** die Sensoren (S1,S2,S3,S4) als Mikrofone, als Klopfsensoren und/oder als Beschleunigungssensoren ausgebildet sind.

**18.** Vorrichtung zum Steuern des Auslösens mindestens eines Airbags eines Fahrzeuges (2) mit einer Vorrichtung zum Bestimmen der Ortes der Krafteinwirkung nach einem der Ansprüche 13 bis 17.

**Claims**

**1.** Method for determining the location of the action of a force on a vehicle (2),

    a) in which, using at least three sensors (S1, S2, S3, S4) which are arranged spaced apart from one another in the vehicle (2), in each case a time at which a signal of the action of a force is received is measured,

b) in which the transit time differences between the measurement signals of at least two independent pairs of sensors (S1, S2, S3, S4) are calculated, and

c) in which the location of the action of the force is calculated from the at least two transit time differences, from the signal speed and from the coordinates of the sensor positions.

2. Method according to Claim 1, in which the sensors (S1, S2, S3, S4) are arranged essentially in one plane.

3. Method according to Claim 1 or 2, in which the coordinates of the sensor positions are arranged in the region of the bottom of the vehicle.

4. Method according to Claim 1, in which it is assumed by approximation that the sensors (S1, S2, S3, S4) are arranged in one plane.

5. Method according to one of Claims 1 to 4, in which in step c) the equation system

$$v \cdot (t_i - t_j) = \sqrt{(x - x_i)^2 + (y - y_i)^2} - \sqrt{(x - x_j)^2 + (y - y_j)^2}$$

$$v \cdot (t_i - t_k) = \sqrt{(x - x_i)^2 + (y - y_i)^2} - \sqrt{(x - x_k)^2 + (y - y_k)^2}$$

with

$x, y$ -    coordinates of the action of the force
$t$ -    time of the action of the force
$x_i, y_i$ -    coordinates of the sensor positions i, where i, j, k = 1, 2, 3 and $i \neq j \neq k$,
$t_i$ -    measured time of the action of the force at the location of the sensors (S1, S2, S3, S4),
$v$ -    speed of the signal,

is solved and the coordinates x and y are calculated.

6. Method according to one of Claims 1 to 4, in which the plane of the coordinates of the sensor positions or the approximated coordinates of the sensor positions is divided by a matrix into a multiplicity of partial surfaces, and in which the minimum and maximum transit time differences for at least two pairs of sensors (S1, S2, S3, S4) are determined in each partial surface.

7. Method according to Claim 6, in which the minimum and maximum transit time differences are calculated or determined experimentally.

8. Method according to Claim 6 or 7, in which the matrix lines are formed by lines of equal transit time differences, in particular hyperbolae.

9. Method according to one of Claims 6 to 8, in which in step c) the associated partial surface in which the location of the action of the force is located is calculated from the transit time differences.

10. Method according to one of Claims 1 to 9, in which in step c) the measurement signal of a fourth sensor is evaluated.

11. Method for controlling the triggering of at least one airbag of a vehicle (2),

- in which the location of the action of a force on the vehicle (2) is determined using the method according to one of Claims 1 to 10,
- in which there is predefined a first zone of locations of the action of the force in which the action of the force is considered to be an accident,
- in which there is predefined a second zone of locations of the action of the force in which the action of the force is not considered to be an accident,
- in which it is determined whether the location of the action of the force lies in the. first zone or the second zone, and

- in which the at least one airbag is triggered when the location of the action of the force lies in the first zone.

**12.** Method according to Claim 11, in which the first zone and the second zone each have at least one area.

**13.** Device for determining the location of the action of a force on a vehicle (2),

- having a control unit (4) and
- having at least three sensors (S1, S2, S3, S4),
- the sensors (S1, S2, S3, S4) being connected to the control unit (4)
- so that the measurement signals can be transmitted to the control unit (4), **characterized**
- **in that** the sensors (S1, S2, S3, S4) are suitable for measuring the action of the force resolved over time, and
- **in that** the control unit (4) is suitable for calculating the location of the action of the force from the transit time differences of the measurement signals resolved over time, of the signal speeds and from the coordinates of the sensor positions.

**14.** Device according to Claim 13, **characterized in that** the sensors (S1, S2, S3, S4) are arranged essentially in one plane.

**15.** Device according to Claim 13 or 14, **characterized in that** the sensors (S1, S2, S3, S4) are arranged in the region of the undersurface (6) of the vehicle.

**16.** Device according to one of Claims 13 to 15, **characterized in that** the sensors (S1, S2, S3, S4) are arranged within the control unit (4) and/or in the central tunnel and/or in the seat crossmember under the front seats and/or in the wheel cases and/or in the bumpers.

**17.** Device according to one of Claims 13 to 16, **characterized in that** the sensors (S1, S2, S3, S4) are designed as microphones, as knocking sensors and/or as acceleration sensors.

**18.** Device for controlling the triggering of at least one airbag of a vehicle (2) having a device for determining the location of the action of the force according to one of Claims 13 to 17.


**Revendications**

**1.** Procédé permettant de déterminer le point d'action d'une force sur un véhicule (2),

a) dans lequel, à l'aide d'au moins trois capteurs (S1, S2, S3, S4) disposés dans le véhicule (2) de façon espacée les uns des autres, on mesure un instant où arrive un signal d'une action d'une force,

b) dans lequel on calcule les différences de temps de propagation entre les signaux de mesure d'au moins deux paires indépendantes de capteurs (S1, S2, S3, S4), et

c) dans lequel on calcule le point d'action d'une force à partir d'au moins deux différences de temps de propagation, de la vitesse de signal et des coordonnées des positions de capteur.

**2.** Procédé selon la revendication 1, dans lequel les capteurs (S1, S2, S3, S4) sont disposés substantiellement dans un plan.

**3.** Procédé selon la revendication 1 ou 2, dans lequel les coordonnées des positions de capteur sont disposées dans la région du dessous de caisse de véhicule.

**4.** Procédé selon la revendication 1, dans lequel il est supposé par approximation que les capteurs (S1, S2, S3, S4) sont disposés dans un plan.

**5.** Procédé selon l'une quelconque des revendications 1 à 4, dans lequel le système d'équations

$$\cdot\left(t_i - t_j\right) = \sqrt{(x - x_i)^2 + (y - y_i)^2} - \sqrt{(x - x_j)^2 + (y - y_j)^2}$$

$$\cdot\left(t_i - t_k\right) = \sqrt{(x - x_i)^2 + (y - y_i)^2} - \sqrt{(x - x_k)^2 + (y - y_k)^2}$$

où

$x, y$ -     coordonnées de l'action d'une force,
$t$ -     instant de l'action d'une force,
$x_i, y_i$ -     coordonnées des positions de capteur i, où i, j, k = 1, 2, 3, et $i \neq j \neq k$,
$t_i$ -     instant mesuré de l'action d'une force à l'emplacement des capteurs (S1, S2, S3, S4),
$v$ -     vitesse de signal,

est résolu à l'étape c) et les coordonnées x et y sont calculées.

6. Procédé selon l'une quelconque des revendications 1 à 4, dans lequel le plan des coordonnées des positions de capteur ou des coordonnées approchées des positions de capteur est divisé par un quadrillage en une pluralité de surfaces partielles, et dans lequel, pour chaque surface partielle, les différences de temps de propagation minimales et maximales sont déterminées pour au moins deux paires de capteurs (S1, S2, S3, S4).

7. Procédé selon la revendication 6, dans lequel les différences de temps de propagation minimales et maximales sont calculées ou déterminées de façon expérimentale.

8. Procédé selon la revendication 6 ou 7, dans lequel les lignes de quadrillage sont constituées par des lignes de différences de temps de propagation identiques, en particulier d'hyperboles.

9. Procédé selon l'une quelconque des revendications 6 à 8, dans lequel à l'étape c), on calcule la surface partielle associée dans laquelle se situe le point d'action d'une force à partir des différences de temps de propagation.

10. Procédé selon l'une quelconque des revendications 1 à 9, dans lequel à l'étape c), le signal de mesure d'un quatrième capteur est analysé.

11. Procédé permettant de commander le déclenchement d'au moins un airbag d'un véhicule (2),

- dans lequel, à l'aide du procédé selon l'une quelconque des revendications 1 à 10, le point d'action d'une force sur le véhicule (2) est déterminé,

- dans lequel une première zone de points d'action d'une force est prédéterminée dans laquelle une action d'une force est considérée comme un accident,

- dans lequel une deuxième zone de points d'action d'une force est prédéterminée dans laquelle une action d'une force n'est pas considérée comme un accident,

- dans lequel il est déterminé si le point d'action d'une force se situe dans la première zone ou dans la deuxième zone, et

- dans lequel l'au moins un airbag est déclenché quand le point d'action d'une force se situe dans la première zone.

12. Procédé selon la revendication 11, dans lequel la première zone et la deuxième zone présentent respectivement au moins une région.

**13.** Dispositif permettant de déterminer le point d'action d'une force sur un véhicule (2)

- avec une unité de commande (4) et

- avec au moins trois capteurs (S1, S2, S3, S4),

- les capteurs (S1, S2, S3, S4) étant reliés à l'unité de commande (4),

- de sorte que les signaux de mesure sont transmissibles à l'unité de commande (4),

**caractérisé en ce que**

- les capteurs (S1, S2, S3, S4) sont adaptés pour mesurer l'action d'une force de façon résolue dans le temps, et

- **en ce que** l'unité de commande (4) est adaptée pour calculer le point d'action d'une force à partir des différences de temps de propagation des signaux de mesure résolus dans le temps, des vitesses de signal et des coordonnées des positions de capteur.

**14.** Dispositif selon la revendication 13, **caractérisé en ce que** les capteurs (S1, S2, S3, S4) sont disposés substantiellement dans un plan.

**15.** Dispositif selon la revendication 13 ou 14, **caractérisé en ce que** les capteurs (S1, S2, S3, S4) sont disposés dans la région du dessous de caisse de véhicule (6).

**16.** Dispositif selon l'une quelconque des revendications 13 à 15, **caractérisé en ce que** les capteurs (S1, S2, S3, S4) sont disposés à l'intérieur de l'unité de commande (4) et/ou dans le tunnel central et/ou dans la traverse de siège sous les sièges avant et/ou dans les carters de roue et/ou dans les pare-chocs.

**17.** Dispositif selon l'une quelconque des revendications 13 à 16, **caractérisé en ce que** les capteurs (S1, S2, S3, S4) sont réalisés comme des microphones, des capteurs de détonation et/ou des capteurs d'accélération.

**18.** Dispositif permettant de commander le déclenchement d'au moins un airbag d'un véhicule (2) avec un dispositif permettant de déterminer le point d'action d'une force selon l'une quelconque des revendications 13 à 17.

FIG. 1

FIG. 2

FIG. 3

FIG. 4

FIG. 5

FIG. 6